(19)

**Europäisches Patentamt**
**European Patent Office**
**Office européen des brevets**

(11) **EP 4 491 988 A1**

(12) **EUROPEAN PATENT APPLICATION**
published in accordance with Art. 153(4) EPC

(43) Date of publication:
**15.01.2025 Bulletin 2025/03**

(21) Application number: **22930942.2**

(22) Date of filing: **11.03.2022**

(51) International Patent Classification (IPC):
*F26B 3/24* (2006.01)  *F26B 17/28* (2006.01)
*B01J 2/02* (2006.01)

(52) Cooperative Patent Classification (CPC):
**B01F 29/00; B01J 2/02; B22F 9/08; F26B 3/24; F26B 17/28**

(86) International application number:
**PCT/JP2022/011076**

(87) International publication number:
**WO 2023/170962 (14.09.2023 Gazette 2023/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **M. Technique Co., Ltd.**
**Izumi-shi, Osaka 594-1144 (JP)**

(72) Inventors:
• **ENOMURA Masakazu**
 **Izumi-shi, Osaka 594-1144 (JP)**
• **ARAKI Kaeko**
 **Izumi-shi, Osaka 594-1144 (JP)**

(74) Representative: **Marks & Clerk LLP**
 **15 Fetter Lane**
 **London EC4A 1BW (GB)**

(54) **SPRAY DRYER**

(57) Provided is a spray dryer with which a fluid that has been subjected to a fluid processing in a spray device can be directly sprayed from the spray device into a drying chamber so that the fluid can be dried, without the need for a dispersion machine for adjusting the dispersion state of a dispersion solution to be sprayed into the drying chamber. The spray dryer comprises a spray device F. The spray device F comprises processing surfaces 1, 2 disposed opposing each other, and a rotation mechanism M that rotates at least one of the processing surfaces 1, 2 relative to the other. The processing surfaces 1, 2 define a circular flow path 3 through which is passed a fluid to be processed containing a first fluid and a second fluid. The circular flow path 3 comprises introduction ports d1, d2. The introduction port d1 introduces, at an opening which connects to the circular flow path 3, the first fluid from the inside of the circular flow path 3. The introduction port d2 opens in the middle of the circular flow path 3, and combines the second fluid with the first fluid which has been constrained into a thin-film fluid by the processing surfaces 1, 2. The fluid to be processed is subjected to fluid processing between the processing surfaces 1, 2, and the fluid-treated fluid is sprayed to the outside from between the processing surfaces 1, 2.

FIG. 1

**Description**

TECHNICAL FIELD

The present invention relates to improvement of a spray dryer, and in particular to a spray dryer employing, as a flow path of a spray device installed in the spray dryer, a circular flow path defined between processing surfaces, one of which relatively rotates to the other, and using a microreactor in which fluid processing such as molecular dispersion and separation reaction takes place in the circular flow path as the spray device.

BACKGROUND ART

A spray dryer is also called as a spray-dryer.

A spray dryer is a dryer capable of drying sprayed fluids into particle form in a short period of time.

In a spray dryer, the fluid is quickly dried and granulated to produce particles through continuous contact with gas or heated air while the nozzles or discs in the drying chamber refine the fluid and increase its surface area per unit volume.

Therefore, when producing particles using the spray dryer, there is little deterioration, etc., of even heat-sensitive substances, many steps such as concentration, filtration, pulverization, classification and drying of the fluid can be saved during particle production, and the dried particles are nearly spherical and have excellent fluidity.

In recent years, with the development of nanotechnology, there has been a great demand for nano-sized particles. In Patent Document 1, it is proposed to dry a dispersion solution of fine particles, for example, drying a dispersion of polymer fine particles of monomer by spray-drying in a spray dryer provided with a four-fluid nozzle. In Examples of Patent Document 1, there are fewer aggregated particles of fine particles in Example using a spray dryer provided with a four-fluid nozzle than in Comparative Example using a spray dryer provided with a two-fluid nozzle.

According to the method in Patent Document 1, fine particles of about several um can be dried, and Patent Document 2 is proposed for drying smaller particles.

In Patent Document 2, a method and device for separating and drying minute substances are proposed, this device is characterized by having two processing surfaces arranged opposite to each other that rotate relative to each other on the same axis, and when a fluid to be processed in which the minute substances are mixed is fed between the two processing surfaces, the two processing surfaces are separated by minute gap due to a pressure possessed by a liquid film comprising the fluid to be processed and the minute substances are separated to each other while passing through a minute gap, and a drying means for drying fine droplets of the fluid to be processed in which at least one of the minute substances is released outward from between two processing surfaces mentioned above are included in the processed fluid to obtain the minute substances in the separated state, and as the function of this device, during each minute substance pass through the minute gap regulated by the two processing surfaces which relatively rotate with high speed to surely separate by the function such as shear force, and are released as the fine droplets of the fluid to be processed toward drying region.

However, in Patent Document 1 and Patent Document 2, the material to be dried is directly sent to a spray dryer in a state where it is dispersed in a dispersion solution and is spray-dried, the drying state changes depending on the dispersion state of the drying material is good or bad. In addition, when the fine particles that are material to be dried aggregate, the once aggregated particles require a dispersing machine that requires a large amount of energy to create the desired dispersion state, and a large amount of energy is also required to introduce the dispersion solution into the spray dryer while maintaining the desired dispersion state.

In Patent Document 3, it proposes a spraying disc that includes upper and lower mounting disks, a filter member arranged to cover a distance between an outer edge part of the upper mounting disk and an outer edge part of the lower mounting disk, and a plurality of substantially conical collars for spraying arranged along the substantially peripherals of the upper and lower mounting disks. In addition, it is also proposed to supply raw materials such as ceramic slurry directly to the spraying disc, but peripheral speed of the spraying disc is 25 m/sec and the particle diameter of the microparticulated particles in the resulting slurry is about 20 to 100 um, in the examples, so that the effect of crushing of coarse-grained droplets by the filter members can be recognized but it is questionable whether it can handle even smaller particles.

In Patent Document 4, it proposes a calcium carbonate powder composition and method for producing the same. As for the example, it is shown that calcium carbonate slurry supplied to a spray device is pre-treated with a high-pressure homogenizer. A high-pressure homogenizer is an equipment that applies a high pressure of several hundred $kgf/cm^2$ to 1,000 $kgf/cm^2$ to the material to be processed, and pass it through a minute clearance, and then convert the energy of the pressure into speed, thereby atomizing by applying shear force to the material to be processed. Although high-pressure homogenizers have high atomization power, they also have the problem of consuming a lot of energy. In addition, the calcium carbonate slurry treated with a high-pressure homogenizer is supplied to a disk rotating at a high speed with a rotation number of about 5,000 to 20,000 rpm, and the calcium carbonate slurry supplied to the disk is refined by the centrifugal force generated by the rotation of the disk, and dried in this state so that a lot of energy is also consumed at this stage.

In Patent Document 5, it proposes a rotary atomizer that does not escape slurry mist from inside the rotary disc to the gap side in order to prevent the deposit of slurry mist which escapes form the rotary disc into the gap between the rotary disc and the stationary ring. This proposal describes that adhesion and deposit of slurry deposit in gap between the rotary disc and wall surface of the fixed stationary ring can be prevented, so that running costs is reduced by 15 to 20%. However, in order to achieve the expected performance, the rotary disk is required to rotate at a high speed of 100 to 120 m/sec or more to which still requires a large amount of energy, even with such energy invested, limitation of droplet diameter is a few 10 μm.

In Patent Document 6, it proposes a method for producing nanoparticles, wherein a minute distance of 1 mm or less is maintained between two processing surfaces, one of which can approach to and separate from the other and rotate relative to the other, and the distance between the two processing surfaces maintained at this minute distance is served as a flow path for the fluid to be processed to form a forced thin film of the fluid to be processed, thereby separating the nanoparticles in this forced thin film.

The mixing and reaction processes in the fluid processing device described in Patent Document 6 are desirably performed under laminar flow condition. Under laminar flow condition, the reaction treatment is carried out while or after mixing by molecular dispersion, uniform particles are produced in the case of being accompanied by separation, and it has been reported its advantageous as a microreactor.

However, Patent Document 6 does not disclose circularity of the particles obtained by the treatment between the processing surfaces.

Also, when a fluid to be processed is processed using the device described in Patent Document 6, the device is operated so that the pressure of the fluid at the outlet of the device was the same as the pressure outside the device from which the fluid was discharged.

PRIOR ART DOCUMENTS

PATENT DOCUMENTS

Patent Document 1: Japanese Patent Laid-Open Publication No. 2002-249512A
Patent Document 2: Japanese Patent Laid-Open Publication No. 2004-160309A
Patent Document 3: Japanese Patent Laid-Open Publication No. 2006-326398A
Patent Document 4: Japanese Patent Laid-Open Publication No. 2002-34510A
Patent Document 5: Japanese Patent Laid-Open Publication No. Hei 6-277567A
Patent Document 6: Japanese Patent Laid-Open Publication No. 2011-189348A

SUMMARY OF THE INVENTION

PROBLEMS TO BE SOLVED BY THE INVENTION

Under the circumstance as mentioned above, the present invention has been performed, and an object is to provide a spray dryer that can dry the fluid by spraying the fluid subjected to the fluid treatment with the spray device directly from the spray device into the drying chamber, without requiring a dispersion device, etc., to adjust the dispersion state of the dispersion solution sprayed into the drying chamber of the spray dryer. In addition, another object is to provide a spray dryer provided with a spray device capable of producing fine spray droplets by controlling the pressure difference between the pressure of the fluid at the outlet of the spray device and the pressure in the drying chamber that houses the spray device. Further, another object is to provide a spray dryer provided with a spray device which is configured to apply a rotation-imparting force to particles contained in a thin-film fluid formed by merging of the fluids to be processed flowing through the spray device.

MEANS FOR SOLVING PROBLEM

The present invention relates to a spray dryer equipped with a spray device, the spray device is configured to comprise at least two processing surfaces arranged opposite to each other, and a rotation mechanism for rotating at least one of the at least two processing surfaces relative to the other, the at least processing surfaces defining an circular flow path through which fluid to be processed is passed, the circular flow path including at least two introduction ports; the fluid to be processed includes a first fluid and a second fluid; one of the introduction ports serves as an opening leading to the circular flow path and introduces the first fluid from inside the circular flow path; the other one of introduction ports opens in the middle of the circular flow path; the second fluid is merged with the first fluid that has become a thin-film fluid by being forced by the at least two processing surfaces, whereby the fluid processing to the fluid to be processed is performed between the at least two processing surfaces; and the fluid subjected to the fluid processing is sprayed outward from between the at least two processing surfaces.

The present invention also relates to a spray dryer equipped with a spray device, the spray device is configured to comprise at least two processing surfaces arranged opposite to each other, and a rotation mechanism for rotating at least one of the at least two processing surfaces relative to the other, the at least processing surfaces defining an circular flow path through which fluids to be processed are passed; the fluid to be processed comprises two or more kinds of raw material fluids, each of which is introduced into the circular flow path; and the two or more kinds of raw material fluids pass through the circular flow path from the inside to the outside in the radial direction in a state where the two or more kinds of raw material fluids are in the form of thin-film fluids, so that the fluid processing to the fluid to be processed is performed between the at least two processing surfaces, and the fluid subjected to the fluid processing is sprayed outward from between the at least two processing surfaces.

In the present invention, the constitution of the spray device is the same as that of the device described in Patent Document 6.

This is a device provided with at least two processing surfaces, at least one of which one rotates relative to the other, and the two processing surfaces are installed so that they can approach to and separate from each other in the axial direction of the rotation. At least two or more fluids to be processed are introduced into between the two processing surfaces maintained at a minute distance to form a forced thin film, and by subjecting to fluid processing such as mixing, stirring, and reactions in the forced thin film, it can be used for reactions accompanying solid separation or generation of gas, and for processing highly viscous materials to be treated, and the desired homogeneous substance can be obtained.

As a characteristic of this device, it may be point out that the fluid to be processed, which is pressurized by fluid pressure imparting mechanism, is passed through an circular flow path formed between processing surfaces arranged opposite to each other, whereby the fluid to be processed is processed in a state of being a thin-film fluid of, for example, 1 mm or less.

In this device, when using a plural kinds of fluids (for example, a first fluid and a second fluid) as a fluid to be processed, the first fluid is passed from the inside to the outside of the circular flow path to form a thin-film fluid of the first fluid, the second fluid is introduced from the middle of the circular flow path, and the second fluid is merged with the thin-film fluid of the first fluid, so that the two kinds of fluids are subjected to processing in the state of the thin-film fluid of the fluid to be processed. At that time, it is advantageous in the point that the first fluid and the second fluid are merged under condition of laminar flow, so that homogeneous mixing by molecular dispersion in the thin-film fluid can be achieved.

However, as mentioned above, Patent Document 6 does not disclose the circularity of particles obtained by processing between processing surfaces. In addition, when processing a fluid to be processed using the device shown in Patent Document 6, the device was operated so that the pressure of the fluid at the outlet portion of the device is the same as the pressure outside the device from which the fluid is discharged.

In addition, in the present invention, it is suitable that a spray drying chamber that houses the spray device is provided, and difference (p1-p) between pressure p1 of the fluid subjected to the fluid processing at the outlet portion between the at least two processing surfaces and pressure p in the spray drying chamber is 20 kPa or more and 200 kPa or less.

Further, in the present invention, it is suitable to comprise the spray device configured such that thin-film fluid formed by merging of the fluids to be processed in the circular flow path contains particles, and a rotation imparting force is applied to the particles.

Further, the present invention can be implemented in such a manner that the fluid processing is a chemical reaction.

A chemical reaction is a phenomenon in which a substance is transformed into another substance, either by itself or through interaction with another substance. In this case, rearrangement occurs between the atoms that make up the substance, but the number of atoms does not change before or after the interaction. The term "chemical reaction" is synonymous with "chemical change," but is called especially when focusing on the process itself.

The reactions can be broadly classified into inorganic reactions and organic reactions, and when classified based on the reaction mechanism, there are redox reactions, polycondensation reactions, addition reactions, substitution reactions, chain reactions, disproportionation reactions, and so on. In the present invention, recrystallization is also included in chemical reactions.

In the present invention, it is also appropriate that the distance of the at least two processing surfaces is 1 mm or less.

In the present invention, it is also appropriate to implement as one in which the at least two processing surfaces relatively rotate at a rotational speed of 6,000 rpm or less. This spray device can be used as a microreactor, and is particularly preferable to be used as a device that performs fluid processing in a thin-film fluid formed under laminar flow conditions for a fluid to be processed passing through an circular flow path and sprays the fluid subjected to the fluid processing to the outside, and in that case, the relative rotational speed of the at least two processing surfaces is appropriately 200 to 6,000 rpm, and more preferably 350 to 5,000 rpm.

The shear force that imparts rotation to the particles produced in the thin-film fluid by the fluid processing of the fluid to be processed under laminar flow conditions is called rotation imparting force, and the particles to which the rotation imparting force is imparted increase their circularity by the rotation, and a fluid containing particles with high circularity is sprayed outward from the outlet portion between the processing surfaces. For controlling the rotation imparting force, control of a Reynolds number Re is necessary, and the Reynolds number Re of the thin-film fluid suitable for the rotation imparting force is preferably 200 or less, more preferably 100 or less, and further preferably 50 or less. By setting the Reynolds number of the thin-film fluid to 200 or less, the circularity of the particles having a uniform particle diameter can be increased. Thus, the inventors of the present invention have found with regard to the range of the Reynolds number Re in which the particle diameter distribution of the particles is narrow and the circularity of the particles is increased.

Further, the present invention can be also implemented by including a raw material supply device that supplies the fluid to be processed as a raw material to the spray device, a spray drying chamber that houses the spray device, and a gas supply device that supplies gas for drying the fluid subjected to the fluid processing sprayed from the spray device to the spray drying chamber.

Further, the present invention can be also implemented in a such manner that a microwave irradiation mechanism for irradiating microwaves to the fluid subjected to the fluid processing sprayed from the spray device to the spray drying chamber is installed.

The present invention also provides a method for producing particles using a spray dryer equipped with the spray device. The present invention focuses on the pressure difference (p1-p) between the pressure p1 of the fluid at the outlet portion of the spray device and the pressure p in the drying chamber in order to obtain fine spray droplets when the fluid subjected to the fluid processing under laminar flow conditions is sprayed from the spray device, and the present invention focuses on the rotation imparting force and the circularity of the particles obtained by the fluid processing when the fluid processing is carried out under laminar flow conditions using the spray device.

EFFECTS OF THE INVENTION

The present invention can provide a spray dryer that does not require a dispersion device to adjust dispersion state of fluid to be sprayed into spray drying chamber by spraying the fluid that has been subjected to fluid processing such as reaction, separation, and homogenization to the fluid to be processed in the spray device directly from the spray device into the spray drying chamber, thereby drying and powdering the fluid. In addition, by carrying out the fluid processing to the fluid to be processed in the spray device, the fluid processing to the fluid to be processed, which is the preliminary process of spray drying, can be completed within the spray device, the fluid processing to the fluid to be processed and spraying of the fluid that has been subjected to the fluid processing into the spray drying chamber can be carried out in a single device, whereby not only many steps such as concentration, filtration, pulverization, and classification can achieve labor savings, but also energy saving in the spray dryer can be realized.

By feeding the fluid to be processed to this spray device and carrying out the fluid processing to the fluid to be processed between the processing surfaces, the target particles can be efficiently produced. By passing the fluid to be processed through the circular flow path in the state of a forced thin-film fluid by the processing surfaces, mixing due to molecular dispersion is carried out under laminar flow conditions. Then, the fluid subjected to the fluid processing is sprayed as fine droplets into the spray drying chamber outward from between the processing surfaces, which are adjusted to 1 mm or less, and the fine droplets are dried, so that even minute substances of a few nm in size contained in the fine droplets can be dried.

In addition, when the pressure difference (p1-p) between the pressure p1 of the fluid that has been subjected to the fluid processing at the outlet portion between the at least two processing surfaces and the pressure p in the spray drying chamber are set to 20 kPa or more and 200 kPa or less, the fine droplets can be sprayed from the spray device into the spray drying chamber, and a spray dryer capable of obtaining fine dried product by drying fine droplets could be provided.

Further, the present invention can also provide a spray dryer equipped with a spray device, which is so configured to contain particles in the thin-film fluid formed by merging the fluid to be processed, flowing through the spray device, and providing a rotation imparting force to the particles.

BRIEF DESCRIPTION OF THE DRAWINGS

Fig. 1 is a schematic cross-sectional view of the spray device according to the embodiment of the present invention.
Fig. 2 is a graph showing the pressure of the fluid to be processed flowing through the spray device according to the embodiment of the present invention and the pressure inside the spray drying chamber, together with the position in a semi-sectional view of the main section of the device through which the fluid to be processed flows.

Fig. 3(A) is a schematic plan view of the first processing surface of the spray device shown in Fig. 1, and (B) is an enlarged view of the main section of the processing surfaces of the same device.

Fig. 4(A) is a cross-sectional view of the second introduction part of the same device, and (B) is an enlarged view of the main section of the processing surfaces for explaining the second introduction part.

Fig. 5 is an overall constitution view of the spray dryer according to the embodiment of the present invention.

Fig. 6 is a schematic view of the flow of the fluid to be processed between the processing surfaces of the spray device shown in Fig. 1.

Fig. 7 is a TEM picture of curcumin particles produced in Example 1 of the present application.

Fig. 8 is a TEM picture of curcumin particles produced in Comparative Example 1 of the present application.

EMBODIMENT TO CARRY OUT THE INVENTION

Hereinafter, embodiments of the present invention will be explained based on the drawings.

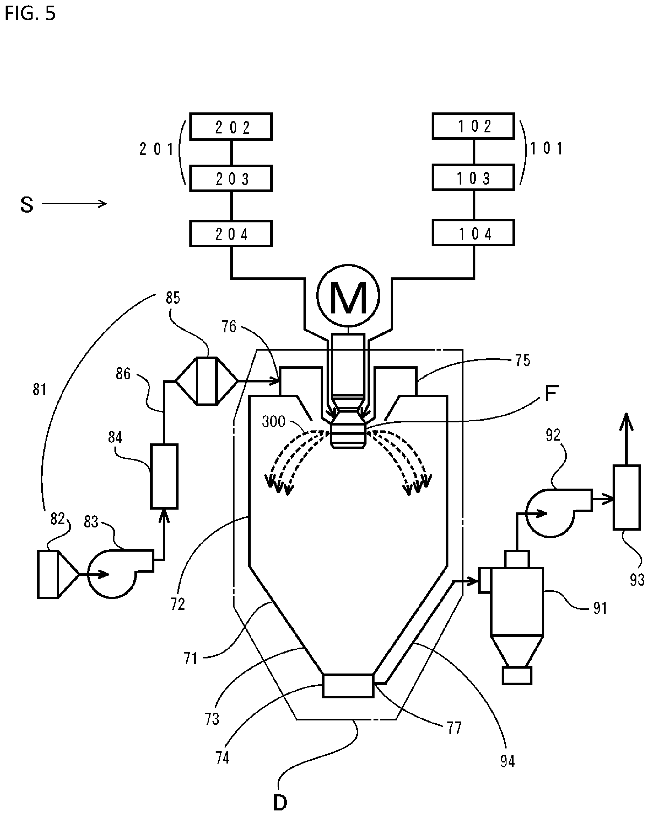

Fig. 5 shows the constitution of one embodiment of a spray dryer D of the present invention. The spray dryer D of the present invention is to obtain dried powder by drying fluids sprayed from a spray device F into a spray drying chamber 71, and is suitable for drying materials to be dried, which are substances in minute size from nanometer size to micron meter size, contained in the fluid sprayed from the spray device F into the spray drying chamber 71. The materials to be dried contained in the fluid being sprayed from the spray device F are not particularly restricted and, for example, include a wide range of materials, such as powdered seasonings, food products, Chinese herbal medicines, pharmaceuticals, chemical products, ceramics, and metals.

The spray dryer D according to the present invention is provided with a spray device F and a spray drying chamber 71, as shown in Fig. 5.

Fluid preparation system S is a system for preparing fluid to be processed that is to be supplied to the spray device F, which is a microreactor, and is equipped with a processing device for preparation, a temperature adjustment device and a pressure imparting mechanism.

With regard to fluid preparation system S

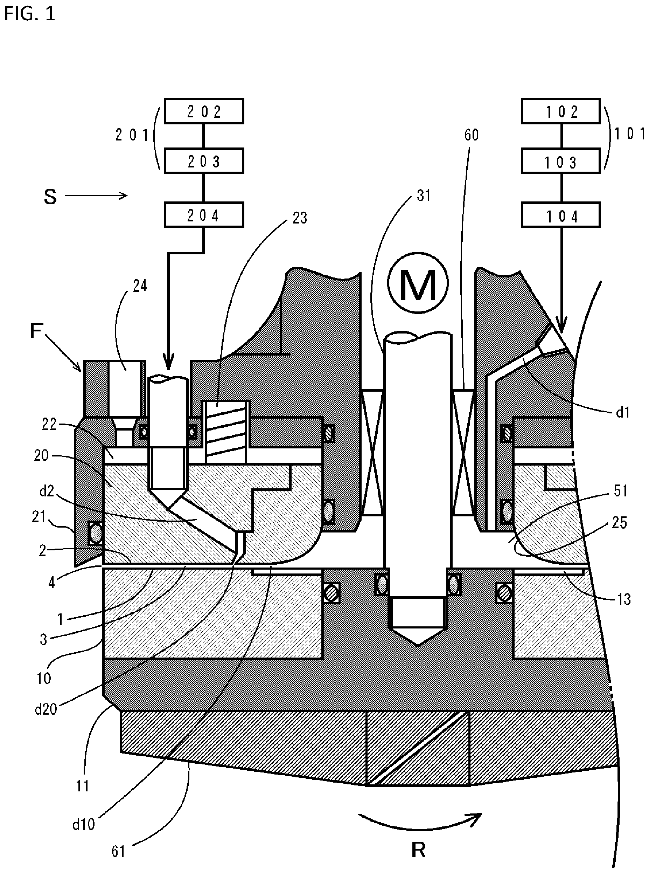

In the embodiment shown in Fig. 1, a plurality of fluids (in this example, a first fluid and a second fluid, but three or more fluid such as third fluid and subsequent fluids may be acceptable. The same applies to two or more kinds of raw material fluids.) are supplied to the spray device F, and fluid processing such as reaction is carried out in the spray device F, and the fluid that is most suitable for conditions of the fluid processing such as reaction is prepared and supplied in the fluid preparation system S.

Specifically, the fluid preparation system S includes a first fluid preparation system 101 and a second fluid preparation system 201 for preparing the first fluid and the second fluid, respectively.

The first fluid preparation system 101 includes a first fluid preparation device 102 and a first fluid temperature adjustment device 103, and the first fluid prepared by these devices is fed to the spray device F by a first fluid pressure imparting mechanism 104. The second fluid preparation system 201 includes a second fluid preparation device 202 and a second fluid temperature adjustment device 203, and the fluid prepared by these devices is fed to the spray device F by a second fluid pressure imparting mechanism 204.

With regard to fluid preparation device The first fluid preparation device 102 and the second fluid preparation device 202 prepare processing such as mixing, stirring, dispersion, emulsification, reaction, and other processes for the first fluid and the second fluid, respectively, to prepare the composition and properties of the substances that constitute the fluids to be supplied. The first fluid temperature adjustment device 103 and the second fluid temperature adjustment device 203 adjust the temperature of the fluids obtained by the first fluid preparation device 102 and the second fluid preparation device 202 to the temperature most suitable for the conditions of the fluid processing in the spray device F.

Specific example of the device in the first fluid preparation device 102 and the second fluid preparation device 202 can include a stirring device, a grinding device, a shaking device, and a reaction device such as a reaction vessel, as well as auxiliary devices which are necessary for carrying out the processes with these devices. Specific example of the stirring device can include a homogenizer and a magnetic stirrer, wherein illustrative example of the homogenizer can include, besides general homogenizers, Clearmix which is manufactured by the applicant of the present invention. The stirring may be carried out with any of a batch system or a continuous system. When the continuous system is used, feeding and discharging of the fluid to and from a stirring tank may be carried out continuously, or by using a continuous mixer without using the stirring tank.

With regard to temperature adjustment device With regard to the first fluid temperature adjustment device 103 and the second fluid temperature adjustment device 203, various devices which can give a temperature energy to the fluid may be used. Specifically, a heat-exchanger with which a cooling action or a heating action can be given to the fluid may be cited.

Meanwhile, it should be understood that the first fluid temperature adjustment device 103 and the second fluid temperature adjustment device 203 are the apparatuses with which the final temperature conditions of the fluids to be processed that are fed to the spray device F are set. Therefore, for example, when the temperature change in the first fluid preparation device 102 and the second fluid preparation device 202 can be exactly predicted, they may be disposed in the upstream sides of or in the same positions as the first fluid preparation device 102 and the second fluid preparation device 202, or may be disposed as the auxiliary apparatuses thereof. Accordingly, it is understood that the first fluid preparation device 102 and the second fluid preparation device 202 are the systems in which all the treatments are carried out in order to adjust the final temperature conditions of the fluids to be fed to the spray device F. However, because it is suitable to carry out the adjustment of the final temperature conditions at the time immediately before the fluids are fed to the spray device F, it is suitable that the first fluid temperature adjustment device 103 and the second fluid temperature adjustment device 203 is disposed in the downstream sides of the first fluid preparation device 102 and the second fluid preparation device 202, respectively, and that the preparation processing steps to the first fluid and the second fluid respectively is carried out before the temperature adjusting steps.

With regard to pressure imparting mechanism The fluids to be processed (in this example, they are the first fluid and the second fluid) after being subjected to these processes are fed to the spray device F by means of the first fluid pressure imparting mechanism 104 and the second fluid pressure imparting mechanism 204. With regard to the first fluid pressure imparting mechanism 104 and the second fluid pressure imparting mechanism 204, various pumps may be used. The first fluid pressure imparting mechanism 104 and the second fluid pressure imparting mechanism 204 may be disposed in the upstream side of the first fluid temperature adjustment device 103 and the second fluid temperature adjustment device 203, and further, in the upstream side of the first fluid preparation apparatus 102 and the second fluid preparation apparatus 202, provided that the fluids to be processed can be fed to the spray device F with prescribed pressures. In order to suppress pulsation during pumping, the pressure imparting mechanism equipped with a pressure vessel may also be employed. A pressurizing gas is introduced into the pressure vessel in which the fluid to be processed is stored; and by means of this pressure the fluid to be processed can be transferred by pressing out the fluid to be processed.

In order to retain the temperature conditions of the fluids to be processed (in this example, the first fluid and the second fluid) which are obtained by the first fluid preparation system 101 and the second fluid preparation system 201, it is also preferable to carry out the embodiment in which a temperature retaining equipment such as a temperature adjusting jacket is disposed in the pipeline till the spray device F.

In the present invention, the first fluid preparation device 102, the first fluid temperature adjustment device 103, the first fluid pressure imparting mechanism 104, the second fluid preparation device 202, the second fluid temperature adjustment device 203 and the second fluid pressure imparting mechanism 204 are collectively referred to as the raw material supply device.

It is preferable that at least one of the fluids to be processed is a liquid. In other words, the fluid other than at least one fluid to be processed may be a gas such as air, nitrogen, hydrogen, or oxygen. With regard to the fluid to be processed, it does not matter the state the substance, as long as the fluid subjected to the fluid processing by the spray device F described later can be sprayed outward from an outlet portion 4 between the processing surfaces 1 and 2 of the spray device F. In addition, when a single material at room temperature such as water at room temperature is used as a single fluid to be processed, the preparation of formulation and properties of the substances constituting the fluid to be processed and adjustment of the temperature of the fluid to be processed are not required, thus, it is possible to select not to use all or part of the fluid preparation devices 102 and 202 and the temperature adjustment devices 103 and 203, if necessary. In addition, when the raw material of the material to be dried contained in the fluid to be processed is solid, the raw material may be used as the fluid to be processed in a melted state, or the raw material may be used in a state where it is mixed or dissolved in a solvent (including a molecularly dispersed state). When the raw material of the material to be dried contained in the fluid to be processed is a liquid or gas, the raw material may be used as it is, or may in a state where the raw material is mixed or dissolved (including a molecularly dispersed state) in a solvent. Further, the fluid to be processed may be in the form of a dispersion or slurry.

With regard to spray device F The spray device F will be explained by referring to Fig. 1 to Fig. 4 and Fig. 6.

The spray device F performs fluid processing on the fluid to be processed and sprays the fluid 300 subjected to the fluid processing into the spray drying chamber 71, and the fluid subjected to the fluid processing includes particles of materials to be dried.

The constitution of the spray device F shown in Fig. 1 and Fig. 3 to Fig. 4 is the same as that of device described in Patent Document 6. Specifically, the fluid to be processed is performed fluid processing in the circular flow path formed between the processing surfaces in the processing members which are able to approach to and separate from each other, and at least one member rotates relative to the other member. The first fluid, which is the first fluid to be processed out of the fluids to be processed, is introduced into between the processing surfaces; and the second fluid, which is the second fluid to be processed out of the fluids to be processed, is introduced into between the processing surfaces from the different flow path, which is independent of the flow path through which the first fluid is introduced, and which is provided with an opening part to between the processing surfaces, so as to mix the first fluid with the second fluid in between the processing surfaces thereby continuously carrying out the fluid processing. In other words, these fluids are converged to become the thin-film fluid in the circular flow path formed between the disc-like processing surfaces which are disposed in a position they are faced with each other in an axial direction; therefore, this is the fluid processing device in which the fluids to be processed is carried out the fluid processing in this thin-film fluid. Meanwhile, this device is optimal for processing of plural fluids to be processed; however, this can also be used to perform fluid processing on a single fluid to be processed in the circular flow path.

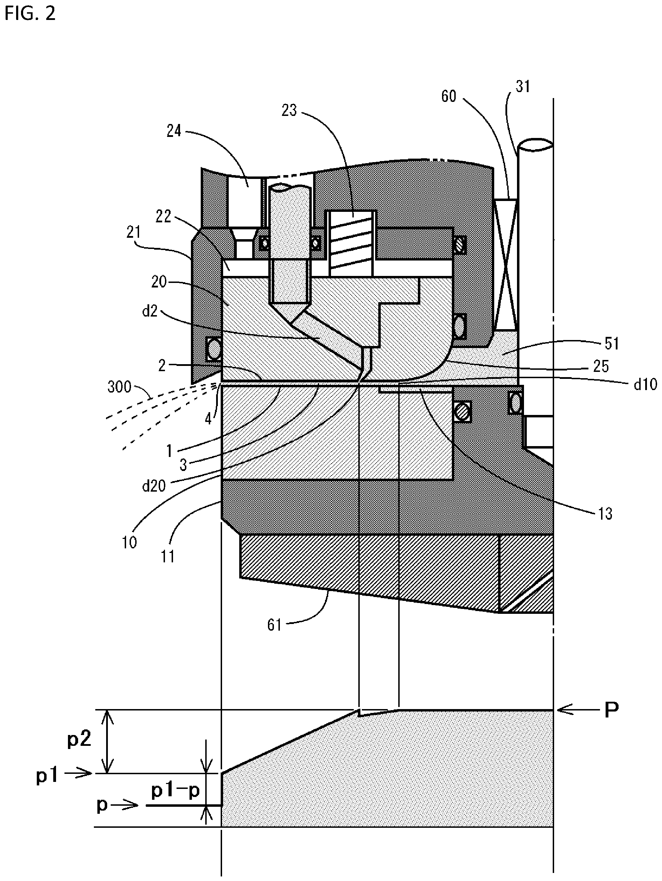

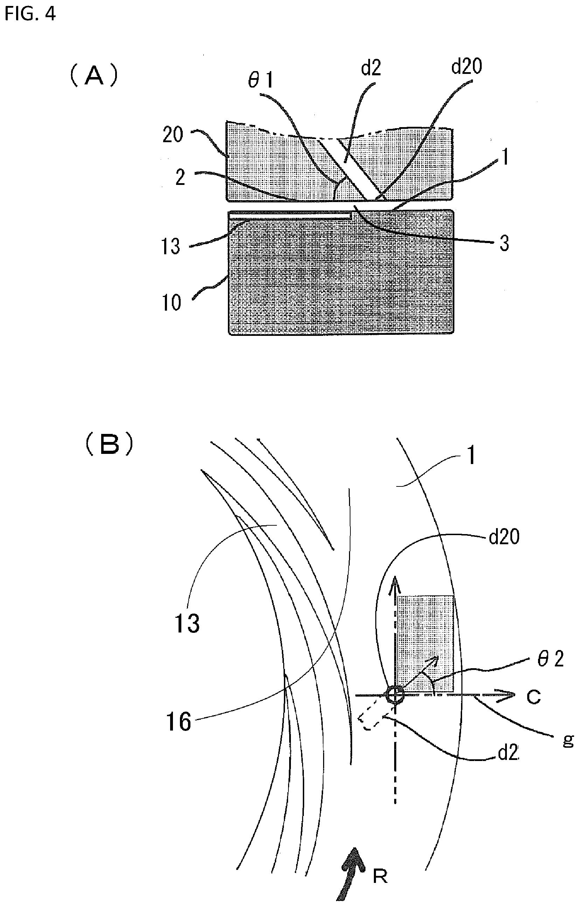

In Fig. 1 and Fig. 2, the upper and lower relationship of the figure corresponds to that of the apparatus. In the present invention, however, the relationships between upper and lower, front and rear, and right and left merely indicate the relative positional relationships thereof, not indicating the absolute positions thereof. In Fig. 1, Fig. 3(A) and Fig. 4(B), R indicates the direction of rotation. In Fig. 4(B), C indicates a centrifugal direction (radial direction).

As mentioned above, the constitution of the spray device F is the same as that of Patent Document 6, but is different from Patent Document 6 in the point that the spray device F, which is a microreactor, is used as a disk-type spray device to be laid in a spray dryer. In the following, in consideration of this point, the spray device F will be explained.

With regard to processing surface

This spray device F is provided with two processing members, the first and the second processing members 10 and 20, which are disposed in a position they are faced with each other, wherein at least one processing member rotates. The faces of the processing members 10 and 20 which are faced with each other serve as the respective processing surfaces. The first processing member 10 is provided with the first processing surface 1 and the second processing member 20 is provided with the second processing surface 2.

Both processing surfaces 1 and 2 define a circular flow path 3, the circular flow path 3 is connected to the fluid preparation system S; and in the circular flow path 3, fluid processing such as mixing, reacting is performed on the fluids to be processed supplied from the first fluid preparation system 101 and the second fluid preparation system 201 of the fluid preparation system S. As the fluid processing according to the present invention, there may be mentioned mixing, stirring, dispersing, emulsifying, reaction, separation, and homogenization, and the said fluid processing is preferable to be a chemical reaction. As the chemical reaction, various kinds of inorganic reactions and organic reactions can be exemplified. The chemical reactions can be broadly classified based on the reaction mechanism, and include oxidation-reduction reactions, polycondensation reactions, addition reactions, substitution reactions, chain reactions, disproportionation reactions. Recrystallization is also included in the chemical reactions.

The distance between the processing surfaces 1 and 2 may be arbitrarily changed, wherein the distance is usually adjusted very narrow to 1 mm or less, for example, in the range of about 0.1 $\mu$m to about 50 $\mu$m. By so doing, the fluids to be processed that pass through between the processing surfaces 1 and 2 become a forced thin-film fluid forced by the processing surfaces 1 and 2, that is, having no free surface.

In the case where plural fluids to be processed including the first fluid and the second fluid are processed by using the spray device F, the spray device F is connected to the flow path of the first fluid, which is introduced into the circular flow path 3 defined by the processing surfaces 1 and 2 from the upstream end (in this example, from an inner side of the circle). With this, the circular flow path 3 forms part of the flow path of the second fluid, different from the first fluid. Then, both the fluids to be processed, i.e., the first fluid and the second fluid, are mixed in the circular flow path 3 between the processing surfaces 1 and 2 thereby carrying out the fluid processing such as a reaction.

To specifically explain, the spray device F is provided with the first holder 11 to hold the first processing member 10, the second holder 21 to hold the second processing member 20, the surface-contacting pressure imparting mechanism, the rotation drive mechanism M, the first introduction part d1, and the second introduction part d2. The first fluid and the second fluid are introduced into the circular flow path 3 under the state in which the pressures of these fluids are set to respective prescribed values by the first fluid pressure imparting mechanism 104 and the second fluid pressure imparting mechanism 204, wherein these mechanisms constitute the fluid pressure imparting mechanism.

In this embodiment, the second processing member 20 is disposed above the first processing member 10, the surface facing downward of the second processing member 20, i.e., the lower surface, is the second processing surfaces 2, and the surface facing upward of the first processing member 10, i.e., the upper surface, is the first processing surface 1.

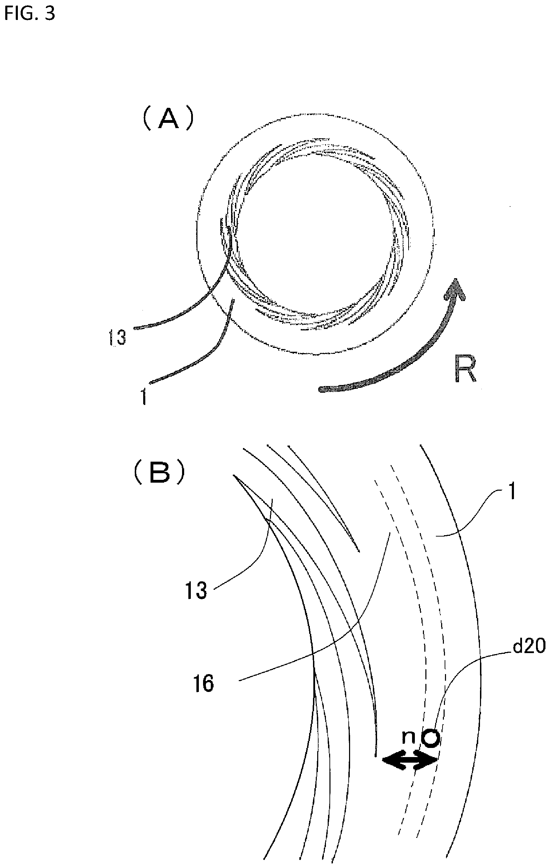

As shown in Fig. 3(A), in this embodiment, the first processing member 10 is a circular body, more specifically, a disc in the shape of a ring. The second processing member 20 is also a disc in the shape of a ring; however, this may be in the shape of a disc without having an opening in the center thereof, provided that the fluids to be processed including the first fluid and the second fluid can be introduced thereinto. Also, in the embodiment, the second processing member 20 is provided with the second processing surface 2 and a pressure receiving surface 25 that is located inside the second processing surfaces 2 and adjacent to the second processing surface 2. In the embodiment, the pressure receiving surface 25 is a round surface, but it may also be implemented as an inclined surface, and the pressure receiving surface 25 may not be provided.

The first and second processing members 10 and 20 may be composed of a single member or a combination of plural members, wherein the construction material thereof may be a ceramic, a sintered metal, an abrasion-resistant steel, sapphire, a metal subjected to hardening treatment, or a hard material subjected to lining, coating, or plating treatment, besides a metal. In this embodiment, at least part of the first and second processing surfaces 1 and 2 is mirror-polished.

With regard to rotation of processing surface At least any one of the first holder 11 and the second holder 21 rotates relative to the other holder by the rotation driving mechanism M such as an electric motor.

The driving axis of the rotation driving mechanism M is connected to the rotation axis 31; and in this embodiment, the first holder 11 attached to the rotation axis 31 rotates, and the first processing member 10 which is supported by the first holder 11 rotates relative to the second processing member 20. As a matter of fact, the second processing member 20 may be rotated, or the both may be rotated as well.

With regard to approaching and separating processing surfaces

At least any one of the first processing member 10 and the second processing member 20 is able to approach to and separate from at least any other processing member in the axial direction of the rotation axis 31, so that the processing surfaces 1 and 2 can approach to and separate from each other.

In this embodiment, the first processing member 10 is configured such that it is fixed in the axial direction but rotates in the circumferential direction. To this first processing member 10, the second processing member 20 approaches and separates in the axial direction, and the second processing member 20 is retractably stored in the storing member 22 which is disposed in the second holder 21.

Meanwhile, the second processing member 20 may be disposed in the storing member 22 of the second holder 21 such that it is movable in parallel to the axial direction; but it may also be stored with a large clearance, and the second processing member 20 may be held with a floating mechanism so as to be able to displace three-dimensionally.

Movement of fluid to be processed

The fluids to be processed receive pressures by the fluid pressure imparting mechanisms including the first fluid pressure imparting mechanism 104 which applies a pressure to the first fluid and the second fluid pressure imparting mechanism 204 which applies a pressure to the second fluid. Under this pressurized state, the fluids to be processed including the first fluid and the second fluid are introduced into between the processing surfaces 1 and 2 through the first introduction part d1 and the second introduction part d2, respectively.

In this embodiment, the first introduction part d1 is a flow path provided in the circular second holder 21, the downstream end of which is connected to a cylindrical space 51 inside radial direction of the circular flow path 3, and the first fluid is introduced between the both processing surfaces 1 and 2 from radially inside of the circular flow path 3. Incidentally, Reference number 60 indicates a sealing unit.

The second introduction part d2 is a flow path disposed in the second processing member 20, wherein one end thereof is open in the second processing surface 2, and this opening is the direct introduction opening (second introduction port d20) to the circular flow path 3.

The first fluid is introduced into the circular flow path 3 from the first introduction part d1 through the clearance in the inner diameter side between the processing members 10 and 20 via the space 51, wherein this clearance plays a role as the first introduction port d10. The first fluid that is introduced from the first introduction port d10 into the circular flow path 3 is made to a thin-film fluid between the first processing surface 1 and the second processing surface 2, and then, it goes through toward an outer side of the processing members 10 and 20. The second fluid having been pressurized to a prescribed pressure is fed into between the processing surfaces 1 and 2 through the second introduction port d20 of the second introduction part d2, and then, it is joined therein to the first fluid having been made to the thin-film fluid; and, while or after they are mixed with each other mainly with molecular dispersion, the fluid processing such as homogenization and reaction treatment is carried out. This molecular dispersion allows the reactants contained in the fluid to be processed to be immediately mixed at the molecular level. This reaction treatment may be accompanied with crystallization, separation, or the like, or may not be accompanied with them.

The thin-film fluid of the first fluid and the second fluid is preferably performed fluid processing including reaction treatment, and then is discharged in a form of mist from the both processing surfaces 1 and 2 to the outside of both processing members 10 and 20. In other words, the fluid 300 subjected to the fluid processing between the processing surfaces 1 and 2 is atomized, and is discharged from the outlet portion 4 between the both processing surfaces 1 and 2 (in this example, between the outer circumferential ends of the processing surfaces 1 and 2) to the outside of both processing members 10 and 20. When the distance between the both processing surfaces 1 and 2 is 1 um, droplets become a very small particle diameter, and when the distance between the both processing surfaces 1 and 2 is 1 mm, droplets become a relatively large particle diameter, and the distance between the processing surfaces 1 and 2 can control the diffusion state of the fluid to be processed as a reactor, and also the particle diameter of the droplets, which are the atomized discharge, can be controlled. With regard to the size of the droplets, the distance between the processing surfaces 1 and 2 becomes an important factor, however, not only the rotation speed of the first processing member 10 affect, but also the flow rate and concentration of the fluid to be processed affect. Further, the flow rate and supply temperature of the gas for drying the droplets of fluid supplied into spray drying chamber 71 can be also controlled according to the desired size of the dried particles.

In addition, although there are a number of disk-type spray devices, a device that is a microreactor and can spray a fluid subjected to the fluid processing in a form of mist from a distance of 1 um has not been realized. By using the spray device F, not only sprayed droplets can be made finer, but also the spray drying chamber can be made smaller. This is because the flying distance of droplets having small particle diameter is shorter than that of droplets having large particle diameters and miniaturization of the spray dryer can be realized. In addition, by using the spray device F, there is no need for a dispersing device, or the like for adjusting the dispersion state of the fluid to be sprayed.

Flash phenomenon

When pressurized water at above room temperature is released at low pressure, the pressurized water partly evaporates. This is a phenomenon that occurs when the enthalpy of pressurized water is greater than the enthalpy of saturated water at low pressure, and is called a flash phenomenon or a flash. The flash phenomenon can be said to be a phenomenon in which water under reduced pressure is unable to retain the enthalpy that water under high pressure has, and enthalpy is released from the water, causing some of the water to evaporate, and is accompanied by a phase change.

Cavitation often occurs simultaneously with the flash phenomenon.

Cavitation is a phenomenon in which bubbles appear and disappear in a short period of time due to pressure differences in a liquid flow, and is also called a cavitation phenomenon. It is a phenomenon in which the pressure of a flowing liquid is locally reduced, causing bubbles containing steam or contained gases to appear and disappear.

For example, the spray device F is provided with a microreactor section that performs fluid processing on the fluid to be processed, that is, a circular flow path 3 and an outlet portion 4 that sprays the fluid subjected to the fluid processing to the outside, and in order to produce generally fine spray droplets in the outlet portion 4, it is advantageous to be high speed rotation of the processing member (in this embodiment, the first processing member 10), at least one of which rotates relative to the other. When the processing member rotates at high speed, turbulence occurs between the processing surfaces 1 and 2, one of which rotates relative to the other, making it impossible to create a uniform particle diameter and consuming a large amount of energy. Inventors of the present application has solved these problems.

This is, usually, for example, the flow of the thin-film fluid in the circular flow path 3 achieves a laminar flow state at a low-speed rotation of about 200 to 6,000 rpm of the processing member to create uniform particles, thereafter, and when the fluid subjected to the fluid processing is sprayed to the outside at the outlet portion 4, the flash phenomenon and/or cavitation is/are used to create fine spray droplets.

This will be explained using Fig. 2.

The first fluid and the second fluid are introduced into the circular flow path 3 from the introduction ports d10 and d20, respectively, with their respective liquid feeding pressure P (when the liquid feeding pressure of the first fluid is P1 and the liquid feeding pressure of the second fluid is P2, then P=P1+P2). The fluid to be processed having a liquid feeding pressure P moves from the inside to the outside (outlet portion 4) of the circular flow path 3 in the radial direction, and at that time, a pressure loss p2 is generated. Therefore, the pressure p1 of the fluid at the outlet portion 4 of the device is represented by following formula (1).

$$p1 = P - p2 \qquad \text{Formula (1)}$$

When processing of a fluid to be processed is carried out with the device described in Patent Document 6, it was the operating conditions of the device that the device is operated aiming that the pressure p1 of the fluid at the outlet portion of the device is controlled, and the pressure p1 of the fluid at the outlet portion of the device and the pressure p outside the device at which the fluid is discharged became the same (p1=p). However, in the spray device F, it is necessary to complete the target processing within the circular flow path 3 between the processing surfaces 1 and 2, the pressure p1 of the fluid at the outlet portion 4 between the processing surfaces 1 and 2 is made greater than the pressure p in the spray drying chamber 71, so that the pressure difference during spraying, that is, the pressure difference (p1-p) between the pressure p1 of the fluid at the outlet portion 4 between the processing surfaces 1 and 2 and the pressure p in the spray drying chamber 71 is utilized.

This pressure difference (p1-p) is significantly effective when it is 20 kPa or more, preferably 50 kPa or more, and more preferably 100 kPa or more. Also, when it is 200 kPa or more, it is not preferable from the viewpoint of energy consumption.

According to the above, high-speed rotation of the processing member of the spray device F is not required, and by utilizing the flash phenomenon and/or cavitation, fine spray droplets can be produced with less energy consumption.

Incidentally, since the first processing member 10 is rotating, the fluid to be processed in the circular flow path 3 does not move linearly from the inside to the outside, but moves in an almost spiral shape from the inside to the outside due to the synthetic vector of the movement vector in the annular radial direction and the movement vector in the circumferential direction acting on the fluid to be processed, thereby being discharged from the both processing surfaces 1 and 2 to the outside of the both processing members 10 and 20.

Also, a blade 61 is attached to the first holder 11. Depending on the shape of the blade 61, the fluid 300 discharged in a form of mist to the outside of the both processing members 10 and 20 from the outlet portion 4 between the processing surfaces 1 and 2 becomes free to either amplify or attenuate the substantially spiral flow, and the shape thereof should be determined according to the purpose at the time of the design. As the shape of the blade 61, there may be mentioned when a substantially spiral flow of the fluid 300 is amplified, a screw blade or a paddle blade configured to flow in the same direction as the flow direction of the substantially spiral flow can be used, and when a substantially spiral flow of the fluid 300 is attenuated, a screw blade or a paddle blade configured to flow in the opposite direction as the flow direction of the substantially spiral flow can be used.

With regard to force balance

Next, the surface-contacting pressure imparting mechanism to impart the force to the processing members thereby forcing the first processing surface 1 and the second processing surface 2 to approach with each other will be explained. In this embodiment, the surface-approaching pressure imparting mechanism is arranged in the second holder 21 and biases the second processing member 20 toward the first processing member 10. The surface-approaching pressure imparting mechanism is a mechanism to generate force (hereinafter, surface-approaching pressure) to press the first processing surface 1 of the first processing member 10 and the second processing surface 2 of the second processing member 20 in the direction to make them approach to each other. The surface-approaching pressure imparting mechanism generates a thin film fluid having minute thickness in a level of nanometer or micrometer by the balance between the surface-approaching pressure and the force to separate the processing surfaces 1 and 2 from each other, i.e., the force such as the fluid pressure which separates the processing surfaces 1 and 2 from each other. In other words, the distance between the processing surfaces 1 and 2 is kept in a predetermined minute distance by the balance between these forces.

In the embodiment shown in FIG. 1, the surface-approaching pressure imparting mechanism is arranged between the accepting part 41 and the second processing member 20. Specifically, the surface-approaching pressure imparting mechanism is composed of a spring 43 to bias the second processing member 20 toward the first processing member 10 and a biasing-fluid introduction part 44 to introduce a biasing fluid such as air and oil, wherein the surface-approaching pressure is provided by the spring 43 and the fluid pressure of the biasing fluid. The surface-approaching pressure may be provided by any one of this spring 43 and the fluid pressure of this biasing fluid; and other forces such as magnetic force and gravitation may also be used.

The second processing member 20 recedes from the first processing member 10 thereby making a minute distance between the processing surfaces by separation force, caused by viscosity and the pressure of the fluid to be processed applied by the fluid pressure imparting mechanism p, against the bias of this surface-approaching pressure imparting mechanism. By this balance between the surface-approaching pressure and the separation force as mentioned above, the first processing surface 1 and the second processing surface 2 can be set with the precision of a micrometer level; and thus, the minute distance between the processing surfaces 1 and 2 is set. As the separation force, there may be mentioned, in addition to the force generated by the fluid pressure and viscosity of the fluid to be processed, centrifugal force due to the rotation of the processing member, the said negative pressure when a negative pressure is applied to the biasing fluid introduction part 24, and spring force when spring 23 is used as a tension spring. This surface-approaching pressure imparting mechanism may be provided in the first holder 11 instead of the second holder 21 or may be provided in both.

The first and second processing members 10 and 20 may be provided with the temperature adjusting mechanism in at least any one of them, whereby the temperature thereof may be adjusted by cooling or heating with the mechanism. The temperature energy possessed by the fluids to be processed including the temperature of cooling or heating by the first fluid temperature adjusting mechanism 103 and the second fluid temperature adjusting mechanism 203 may be used to separate the material to be dried between the processing surfaces, or may be utilized to generate the Bernard conviction or the Marangoni convection in the fluid to be processed that is converted to the thin film fluid.

Depression and Micro-pump effect

As shown in FIG. 3, in the first processing surface 1 of the first processing member 10, a groove-like depression 13 extended toward an outer side from the central part of the first processing member 10, namely in a radius direction, may be formed. The depression 13 may be, as a plane view, curved or spirally extended on the first processing surface 1 as shown in FIG. 3(B), or though not shown in the drawing, may be extended straight radially, or bent at a right angle, or jogged; and the concave portion may be continuous, intermittent, or branched. In addition, this depression 13 may be formed also on the second processing surface 2, or on both the first and second processing surfaces 1 and 2. By forming the depression 13 as mentioned above, the micro-pump effect can be obtained so that the fluid to be processed may be sucked into between the first and second processing surfaces 1 and 2.

When the depression 13 is provided on the first processing surface 1, it is preferable that the base end of the depression 13 reach the inner circumference of the first processing member 10. The front end of the depression 13 extends toward the outer circumferential direction of the first processing surfaces 1, and the depth thereof (cross-section area) may be gradually decreased as going from the base end toward the front end thereof.

Between the front end of the depression 13 and the outer circumferential surface of the first processing surfaces 1, a flat surface 16 not having the depression 13 is provided.

Rotation Speed and Fluid Processing When the second introduction port d20 of the second introduction part d2 is arranged in the second processing surface 2, it is preferable to provide in the position facing the flat surface 14 of the first processing surface 1.

This second introduction port d20 is arranged preferably in the downstream (outside in this case) of the depression 13 of the first processing surface 1. The second introduction port d20 is arranged especially preferably at a position opposite to the flat surface 16 located nearer to the outer diameter than a position where the direction of flow upon introduction of the first fluid by the micro-pump effect into the circular flow path 3 is changed to the direction of a spiral and laminar flow formed between the processing surfaces. Specifically, in FIG. 3(B), a distance n from the outermost side of the depression 13 arranged in the first processing surface 1 in the radius direction is preferably about 0.5 mm or more. Especially in the case of separating fine particles from a fluid, it is preferable that mixing of a plurality of fluids to be processed due to the molecular dispersion as well as reaction and separation of the fine particles therefrom be effected under the condition of a laminar flow.

Thus, since the fluid to be processed is treated under the condition of laminar flow, a rotation speed of the first processing surface 1 is suitably 200 to 6,000 rpm, more preferably 350 to 5,000 rpm (peripheral speed at the outer circumference: 1.8 to 26.2 m/sec). When the first processing surface 1 and the second processing surface 2 are both rotating, the relative rotation speed of the processing surfaces 1 and 2 is suitably 200 to 6,000 rpm, and more preferably 350 to 5,000 rpm. In the spray device F of the present invention in which the fluid to be processed is reacted as a microreactor, as compared with the rotation speed 12,000 rpm (peripheral speed at the outer circumference: 62.8 m/sec) of the processing surfaces in the separation and drying device by action of shearing, and the like, as shown in Patent Document 2, the rotation speed is sufficiently slow, and higher rotation speed causes turbulent flow condition, as a result, for example, the encounter of a plural kinds of substances contained in the first fluid and the second fluid to be reacted between the processing surfaces 1 and 2 becomes random, so that there is a risk that it may difficult to achieve a homogeneous reaction or separation of uniform particles.

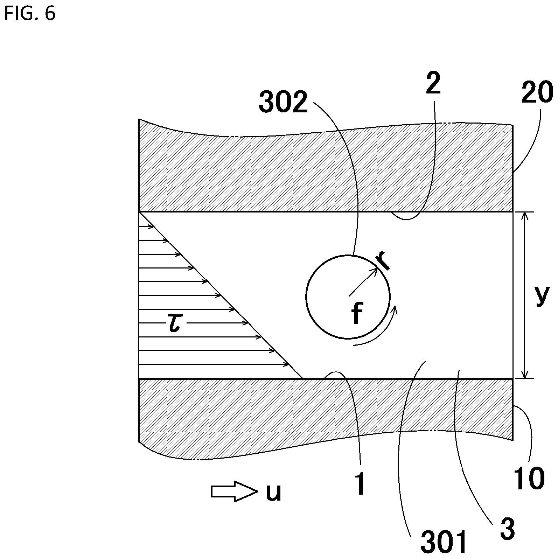

The flow of the fluid to be processed between the processing surfaces 1 and 2, namely, the thin-film fluid 301 is schematically shown by using Fig. 6.

During operation of the spray device F, at least one of the processing members 10 and 20 rotates relative to the other, and in this embodiment, the second processing member 20 does not rotate, and the first processing member 10 rotates at speed u.

As mentioned above, the distance y between the processing surfaces 1 and 2 of the spray device F is usually 1 mm or less, and is optimally from 0.1 um to 50 um.

In the fluid movement, the dimensionless number representing the ratio of inertial force and viscous force is called Reynolds number Re, and the Reynolds number Re is expressed by the following formula (2).

$$\mathrm{Re=Inertial\ force/Viscous\ force}=\rho \cdot L \cdot u/\mu \qquad \mathrm{Formula\ (2)}$$

Here, $\rho$ is fluid density [kg/m$^3$], L is representative length [m], u is representative velocity [m/s], and $\mu$ is viscosity [Pa·s].

The distance between the processing surfaces 1 and 2 of the spray device F is usually adjusted to 1 mm or less, for example, a minute distance of from about 0.1 um to 50 um, so that the amount of fluid held between the processing surfaces 1 and 2 is extremely small. Therefore, the representative length L becomes very small, the centrifugal force of the thin-film fluid passing through between the both processing surfaces 1 and 2 is small, and the effect of viscous force becomes large in the thin-film fluid. Therefore, the Reynolds number becomes small and the thin-film fluid becomes laminar flow.

The centrifugal force is a kind of inertial force in rotation movement, and is the force that acts from the center outward. The centrifugal force is expressed by the following formula (3).

$$\mathrm{Centrifugal\ force\ C}=mr\omega^2 \qquad \mathrm{Formula\ (3)}$$

Here, m represents mass, r represents radius, and $\omega$ represents angular velocity.

As mentioned above, the amount of the fluid held between the processing surfaces 1 and 2 is extremely small, so that the ratio of the velocity to the mass of the fluid becomes very large, and the mass is negligible. Therefore, the effect of gravity can be ignored in the thin-film fluid formed between the processing surfaces 1 and 2.

In the range where the Reynolds number Re is small, the fluid and the respective particles contained in the fluid are said to flow in an orderly manner and are to be in a laminar flow state, in this case, mixing and diffusion are limited to the microscopic range, and all particles 302 having a radius r generated by reactions and the like flow in the macroscopic flow direction, and a shear force τ is applied along the parallel direction of flow. The shear force τ is expressed by the following formula (4).

$$\text{Shear force } \tau = \mu du/dy \qquad \text{Formula (4)}$$

(Here, y is illustrated in coordinates perpendicular to the fluid flow.)

When the Reynolds number Re becomes large to a certain extent, the flow becomes unsteady and transitions to turbulent flow.

Normally, when the Reynolds number Re is about 2,000 to 4,000, a transition to turbulent flow occurs, and in the case of the present invention, the Reynolds number Re is preferably 200 or less (Re≦200), more preferably the Reynolds number Re is 100 or less (Re≦100), and optimally the Reynolds number Re is 50 or less (Re≦50), and as the smaller the Reynolds number Re is, the more uniform the particle diameter of the particles 302 generated by the reaction, etc., becomes.

To explain the uniformity of the particle diameter of the particles 302, as the smaller the Reynolds number Re is, the more uniform the fluid flow becomes, and the more uniform the fluid flow becomes, the more constant the flow becomes, and uncertain factors such as vortexes are reduced. Accordingly, as the smaller the Reynolds number Re is, the more uniform respective particles contained in the fluid becomes, and as a result, the particle diameter of the particles 302 becomes uniform.

From the formulae (2) and (4), as the viscosity μ increases, the shear force τ increases, but the Reynolds number Re decreases. In the embodiment, the first processing member 10 rotates relative to the second processing member 20, and the particles 302 with radius r generated by the reaction or the like shown in Fig. 6 are subjected to shear force as shown in the drawing, but the lower side of the particles 302 receives the greater shear force. As a result, the smaller the Reynolds number Re is, the greater the rotational force f is generated from the lower side to the upper side, causing the particles 302 to rotate greatly and become particles having high circularity. For example, if the other conditions in the formula (4) are held constant, controlling the viscosity of the thin-film fluid 301 leads to control of the particle diameter of the particles 302 and high circularity of the particles 302.

Specifically, as shown in Fig. 6, when the first processing member 10 rotates relative to the second processing member 20 and slippage is assumed to be 0 (zero), the vector of the fluid flow is 0 (zero) on the second processing surface 2, and is u on the first processing surface 1. The vector indication is the arrow on the left side of Fig. 6. According to this, the lower side of the particle 302 receives a large shear force and rotates, and the particle that receives a large rotational force becomes circular.

As mentioned above, the flow transitions to turbulence when the Reynolds number Re is about 2,000 to 4,000. Under turbulent flow conditions, for example, the encounter of a plural kinds of substances contained in the first fluid and the second fluid to be reacted between the processing surfaces 1 and 2 becomes random, so that there is a risk that it may difficult to achieve a homogeneous reaction or separation of uniform particles.

On the other hand, under laminar flow conditions, the reaction treatment is carried out while or after mixing by molecular dispersion, and when separation is accompanied, uniform particles are produced. To obtain uniform particles, fluid processing under laminar flow conditions is preferable.

And, in an environment of a spray dryer D equipped with the spray device F, fluid processing is carried out under laminar flow conditions between the processing surfaces 1 and 2 of the spray device F, and in spraying the fluid subjected to the fluid processing, it is focused on the shear force τ expressed by the formula (4) and the circularity of the particles 302 formed in the thin-film fluid 301. In particular, the shear force that imparts rotation to the particles 302 generated in the thin-film fluid 301 is called the rotation imparting force, and the particles 302 to which the rotation imparting force is applied increase in circularity by rotating and the fluid containing the particles having high circularity is sprayed directly into the spray drying chamber 71 from the outlet portion 4 between the processing surfaces 1 and 2. For controlling the rotation imparting force, control of the Reynolds number Re is required, and the Reynolds number Re of the thin-film fluid suitable for the rotation imparting force is preferably 200 or less, more preferably 100 or less, and further preferably 50 or less. If the Reynolds number Re exceeds 200, it is not preferred since even if the fluid flow in the circular flow path 3 is a laminar flow, particles will break or turbulence will occur.

The applicant of the present application has discovered a range of Reynolds number Re that narrows the particles size distribution of particles and increase the circularity of particles, and by carrying out fluid processing on the fluid to be processed between the processing surfaces 1 and 2 under a specific Reynolds number Re, particles having uniform particle diameter and increased in circularity are obtained, and the fluid 300 containing the said particles is sprayed into the spray drying chamber 71.

And, by rapidly drying the sprayed fluids 300 in the spray drying chamber 71, a dry powder that maintains the same granularity and circularity as those of the particles contained in the fluid 300 is obtained.

With regard to second introduction part

The shape of the second introduction port d20 may be as shown in Fig. 3(B) and Fig. 4(B), an independent opening having a shape such as a circular, or may be a continuous opening having a shape such as a concentric circular ring-shape surrounding the central opening of the second processing surface 2 that is a ring-like disk. In the case that the shape of the second introduction port d20 is the circular ring-shaped, the opening of the circular ring-shaped may be continuous over the entire circumference or may be partially discontinuous.

When the circular ring-shaped second introduction port d20 is arranged in concentrically surround the central opening of the second processing surface 2, the second fluid can be processed under the same condition in the circumferential direction upon introduction this between the processing surfaces 1 and 2, thus, when producing the mass production of particles, it is preferable that the shape of the opening be a concentric circular ring-shape.

This second introduction part d2 may have directionality. For example, as shown in FIG. 4(A), the direction of introduction from the second introduction port d20 of the second processing surface 2 is inclined at a predetermined elevation angle ($\theta$1) relative to the second processing surface 2. The elevation angle ($\theta$1) is set at more than 0° and less than 90°, and when the reaction speed is high, the angle ($\theta$1) is preferably set in the range of 1 degree to 45 degree.

In addition, as shown in FIG. 4(B), in the case that the second introduction port is an independent opening hole, this may have directionality in a plane along the second processing surface 2. The direction of introduction of this second fluid is in the outward direction departing from the center in a radial component of the processing surface and in the forward direction in a rotation component of the fluid between the rotating processing surfaces. In other words, a predetermined angle ($\theta$2) exists facing the rotation direction R from a reference line g, which is the line to the outward direction and in the radial direction passing through the second introduction port d20. This angle ($\theta$2) is also set preferably at more than 0 degree and less than 90 degrees.

Kinds of fluids to be processed and number of flow path

In the embodiment shown in FIG. 1, kinds of the fluid to be processed and numbers of the flow path thereof are set two respectively; but they may be one, or three or more. In the embodiment shown in FIG. 1, the second fluid is introduced into the upstream-side processing space 3 from the second introduction part d2; but this introduction part may be arranged in the first processing member 10 or in both. Alternatively, a plurality of introduction parts may be arranged relative to one fluid to be processed. Each production port is not particularly restricted in its form, size, and number; and these may be changed as appropriate. Further, the introduction port may be arranged immediately before between the first and second processing surfaces 1 and 2, or even in the upstream side thereof. The expression "first" or "second" for each fluid has a meaning for merely discriminating an nth fluid among a plurality of the fluids present; and therefore, a third or more fluids can also exist. Each flow path is tightly sealed by liquid-tight (when the fluid to be processed is a liquid) or by airtight (when the fluid to be processed is a gas).

Spray drying chamber

As shown in Fig. 5, the spray drying chamber 71 is a container for housing the spray device F and drying and powdering the fluid 300 containing the material to be dried sprayed from the spray device F by gas supplied from a gas supply device 81. In the embodiment, the spray drying chamber 71 includes a cylindrical body 72, an inverted truncated cone-shaped bottom portion 73 connected to the body 72, a recovery pocket 74 and a discharge port 77 which are arranged on the bottom portion 73, a top portion 75 connected to the body 72 and a gas supply port 76 arranged on the top portion 75, and the spray device F is housed in the upper part of the spray drying chamber 71. The recovery pocket 74 is a pocket for recovering powder that settles on the bottom portion 73 after the fluid 300 sprayed from the spray device F is dried. The discharge port 77 is connected to a cyclone 91, a bag filter 93 and a blower 92 via a discharge pipe 94, and separation and recovery of the powder are carried out using the recovery pocket 74, the cyclone 91 and the bag filter 93. The cyclone 91, the bag filter 93, the blower 92 and the discharge pipe 94 may be used known items. Also, the gas supply port 76 is connected to a gas supply device 81 (described later) through an air supply pipe 86, and supplies heated gas into the spray drying chamber 71.

Gas supply device

As shown in Fig. 5, the gas supply device 81 supplies gas for drying the fluid 300 sprayed from the spray device F to the spray drying chamber 71, and the gas supply device 81 includes a filter 82, a blower 83, a gas heater 84 and a heated air filter 85, these of which are connected via the air supply pipe 86. The filter 82, the blower 83, the gas heater 84, the heated air filter 85 and the air supply pipe 86 may be used known items. The gas, in addition to air, may be a nitrogen gas or an argon gas. The gas may be appropriately selected depending on the properties of the sprayed fluids 300 and the material to be dried contained in the fluid 300. When a nitrogen gas or an argon gas is used as the gas, a gas supply device for supplying gas to the gas supply port 76 may be used as the gas supply device 81.

Microwave

Although not shown in the drawings, a microwave generating device such as a magnetron may be provided as a microwave irradiation mechanism for irradiating microwaves to the fluid sprayed in the spray drying chamber 71, whereby heating of the sprayed fluid may be accelerated in the spray drying chamber 71.

Next, a method of using the spray dryer D according to the present invention will be explained.

First, the fluid to be processed is prepared as a fluid to be processed which is supplied to the spray device F in the fluid adjustment system S. Specifically, the raw materials of the material to be dried contained in the fluid to be processed are prepared in the first fluid preparation device 102 and the second fluid preparation device 202 to the fluid to be processed before being supplied to the spray device F, and the temperature is adjusted in the temperature adjustment devices 103 and 203. The fluid to be processed prepared by these devices is fed to the spray device F by the pressure imparting mechanisms 104 and 204. When preparation of composition and properties of the substances constituting the fluid to be processed or adjustment of the temperature of the fluid to be processed is not necessary, it is possible to use all or part of the fluid preparation devices 102 and 202 and the temperature adjustment devices 103 and 203. The fluid to be processed sent to the spray device F is subjected to fluid processing between the processing surfaces 1 and 2, the fluid 300 subjected to the fluid processing is sprayed in the form of a mist at a constant flow rate from between the processing surfaces 1 and 2 of the spray device F housed in the upper part of the spray drying chamber 71 into the spray drying chamber 71. In the fluid 300 subjected to the fluid processing, the particles are contained. The relative rotation speed of the processing surfaces 1 and 2 is suitably 6,000 rpm or less, preferably 200 to 6,000 rpm, and more preferably 350 to 5,000 rpm. Also, when the fluid processing to the fluid to be processed is carried out between the processing surfaces 1 and 2, in order to obtain particles having a narrow particle diameter distribution of the particles and high circularity, the Reynolds number Re of the thin-film fluid is preferably 200 or less, more preferably 100 or less, and more preferably 50 or less. Further, in order to spray the fluid 300 subjected to the fluid processing from the outlet portion 4 formed between the processing surfaces 1 and 2 into the spray drying chamber 71 as fine droplets, it is preferable that the pressure difference (p1-p) between the pressure p1 of the fluid at the outlet portion 4 between the processing surfaces 1 and 2 and the pressure p in the spray drying chamber 71 be 20 kPa or more and 200 kPa or less.

On the other hand, a gas from which foreign substances in the air are filtered through the filter 82, and passing through the blower 83, the gas heater 84 and the heated air filter 85 to be heated and filtered is fed from the gas supply port 76 to the top portion of the spray drying chamber 71. The temperature of the gas varies depending on the sprayed fluids 300 or the material to be dried contained in the fluid 300. The fluids 300 sprayed from the spray device F is dried and powdered in the spray drying chamber 71, part of the powder is recovered in the recovery pocket 74, and the remaining powder is discharged from the discharge port 77 to outside the spray drying chamber 71 thereby being separated from the gas and being recovered. Separation of the powder from the gas may be carried out by the cyclone 91 or may be carried out by the bag filter 93. When the particle diameter of the powder itself is small and both the cyclone and the bag filter are required to separate the powder from the gas, the blower is installed behind the bag filter, that is, downstream (not shown in the drawing).

Particle diameter of the particles of the dried powder can be confirmed by a known method. The confirmation method thereof is not particularly limited, and various analysis methods such as microscopic observation, particle diameter distribution measurement can be used. When microscopic observation is carried out, depending on the size of the particle diameter, observation is carried out using the most appropriate method such as an optical microscope, an electron microscope, or the like.

The average circularity of the particles of the dry powder is preferably 0.8 or more, more preferably 0.85 or more, and more preferably 0.9 or more. When the circularity is high, the particle appears as a circle on the image, but is closer to a sphere in reality, and the surface area of the particle becomes small. The circularity is a value calculated by the formula (5) using the perimeter (L) and area (S) of a projection image of a certain particle, and closer the value of the circularity is to 1, the closer the particle is to a spherical shape, and when the particle shape is a perfect sphere, the circularity is the maximum value of 1. Specifically, the circularity of each particle was calculated by the following procedure. Using the image analysis software iTEM (manufactured by Olympus Soft imaging Solutions GmbH), 10 points were taken on the surface of the particle, and the shape of the particle was approximated in the software. The circularity was calculated from the analyzed perimeter (L) and area (S) using the formula (5). The average circularity is an average value of a plurality of circularities.

$$\text{Circularity} = 4\pi S/L^2 \qquad \text{Formula (5)}$$

The coefficient of variation of the particle diameter is a numeral which becomes an index representing the degree of uniformity of the particles being obtained, and can be obtained by the formula (6) from the average particle diameter and standard deviation of the particle diameter distribution of the particles. The smaller the value of the coefficient of variation is, the narrower the distribution of the particle diameter of particles being obtained is, and the uniformity of the particles is high. Furthermore, the larger the value of the coefficient of variation is, the less uniformity as the particles are, so that there is a case of causing problems, for example, that it is necessary to remove particles other than those having required size by classification for use these industrially, etc.

The coefficient of variation of the particle diameter of the obtained particles is preferably 0.4 or less, more preferably 0.35 or less, and further more preferably 0.3 or less. According to this, a classification step is unnecessary.

$$\text{Coefficient of variation (CV)} = \text{Standard deviation} \div \text{average particle diameter} \qquad \text{Formula (6)}$$

Kinds of fluid and fluid processing The method of producing particles made by the spray dryer D according to the present invention can be applied, for example, to various fluids to be processed shown in Patent Document 6, and can be applied to various fluid processings.

EXAMPLES

Hereinafter, the present invention will be explained in more detail by referring to Examples. However, the present invention is not limited to these Examples.

Curcumin particles were produced using the spray dryer D according to the present invention. Curcumin is classified into curcuminoid, which is a kind of polyphenol, and is known as an antioxidant. Curcumin is used not only as a natural pigment but also as a drink and health food with liver function improving properties. Curcumin is also known for its anti-tumor effect, anti-oxidant effect, anti-immune effect, and the like, and is a substance that is highly expected to be used in pharmaceuticals in the future.

TEM Observation

For TEM observation, a transmission electron microscope JEM-2100 (manufactured by JEOL Ltd.) was used. The observation conditions were an acceleration voltage of 80 kV and an observation magnification of 25,000 times or more.

The distance between the maximum outer circumferences of the curcumin particles observed in the TEM picture was measured and used as the particle diameter of the curcumin particles. The average value of the particle diameter of 50 curcumin particles was determined as the average particle diameter of the curcumin particles. Also, the average value of the circularity of 20 particles calculated by the formula (5) was determined as the average circularity, and the coefficient of variation of the particle diameter was calculated by the formula (6).

Example 1

First fluid: Preparation of poor solvent solution

0.67 wt% hydroxypropyl methyl cellulose/99.33 wt% pure water was prepared at a liquid temperature of 34°C in the first fluid preparation device 102. Specifically, it was carried out by the following procedure. Hydroxypropyl methyl cellulose (hereinafter also referred to as HPMC) and pure water were weighed and placed so as to be that hydroxypropyl methyl cellulose (HPMC) and pure water were to be 0.67 wt% hydroxypropyl methyl cellulose (HPMC)/99.33 wt% pure water. CLEAMIX (Name of device: CLM-0.8S, manufactured by M TECNIQUE Co., Ltd.) was used as the first fluid preparation device 102, hydroxypropyl methyl cellulose (HPMC) and pure water were stirred at the rotation speed of the rotor of 15,000 rpm and a temperature inside the container of 34°C under atmospheric pressure (0 kPaG) to prepare a mixed solution (hereinafter referred to a poor solvent solution) of hydroxypropyl methyl cellulose

(HPMC) and pure water. As hydroxypropyl methyl cellulose (HPMC), METOLOSE SE-03 (available from Shin-Etsu Chemical Co., Ltd.) was used.

Next, the poor solvent solution was cooled to 25°C by the first fluid temperature adjustment device 103. The viscosity of the poor solvent solution at 25°C was 2.1 mPa• s.

Next, the poor solvent solution at 25°C was pressurized to 300 kPaG with nitrogen in the first fluid pressure imparting mechanism 104 and fed to the spray device F.

Second fluid: ethanol solution of curcumin

A solution of 1.5 wt% curcumin/98.5 wt% ethanol was prepared at 80°C in the second fluid preparation device 202 under a heated and pressurized state. Specifically, it was carried out by the following procedure. Curcumin and ethanol were weighed and placed so as to be that curcumin and ethanol were to be 1.5 wt% curcumin/98.5 wt% ethanol, and then was charged in an airtight container. CLEAMIX (Name of device: CLM-2.2S, manufactured by M TECNIQUE Co., Ltd.) was used as the second fluid preparation device 202, curcumin and ethanol were stirred in a heated and pressurized state at the rotation speed of the rotor of 10,000 rpm, a temperature in the airtight container of 80°C and a pressure in the airtight container of 60 kPaG whereby curcumin was dissolved in ethanol. As curcumin, Wako Special Grade curcumin (available from FUJIFILM Wako Pure Chemical Corporation) was used, and as ethanol, ethanol (99.5) special grade (available from Kanto Chemical Co., Inc.) was used.

Next, the ethanol solution of curcumin prepared in the second fluid preparation device 202 was cooled to 70°C in the second fluid temperature adjustment device 203 under atmospheric pressure (0 kPaG), and the ethanol solution of curcumin at 70°C was held for 1 hour, and it was visually confirmed that there were no separated materials. A viscosity of the ethanol solution of curcumin at 70°C was 0.6 mPa•s.

Then, the ethanol solution of curcumin at 70°C was pressurized to 100 kPaG with nitrogen in the second fluid pressure imparting mechanism 204 and was fed to the spray device F.

Crystallization operation using poor solvent method

The poor solvent solution prepared in the first fluid preparation system 101 and the ethanol solution of curcumin prepared in the second fluid adjustment system 201 were mixed by using the spray device F. Specifically, as the first fluid, the poor solvent solution at 25°C was fed from the first introduction part d1 at a pressure of 300 kPaG and a flow rate of 15 ml/min. into between the processing surfaces 1 and 2, and as the second fluid, the ethanol solution of curcumin at 70°C was fed at a pressure of 100 kPaG and a flow rate of 5 ml/min. During the operation of the spray device F, the first processing member 10 was rotated at 1,700 rpm (8.9 m/sec as the peripheral speed at the outer circumference). The first fluid and the second fluid were mixed in the thin-film fluid forced between the processing surfaces 1 and 2, and a curcumin particle dispersion solution containing curcumin particles crystallized between the processing surfaces 1 and 2 was sprayed into the spray drying chamber 71. The pressure p1 of the curcumin particle dispersion solution at the outlet portion 4 between the processing surfaces 1 and 2 was 50 kPaG.

Nitrogen gas was heated to 130°C in the gas supply device 81 and supplied from the gas supply port 76 to the top portion 75 of the spray drying chamber 71 at a pressure of 300 kPaG and a flow rate of 70 m$^3$/hr. The nitrogen gas supplied to the spray drying chamber 71 was discharged from the bag filter 93 via the cyclone 91 at an exhaust air temperature of 97 to 94°C. The pressure p in the spray drying chamber 71 was 20 kPaG. As mentioned above, the pressure p1 of the curcumin particle dispersion solution at the outlet portion 4 between the processing surfaces 1 and 2 was 50 kPaG, and therefore the pressure difference (p1-p) was 30 kPa.

Dry powder of curcumin

Dry powder of curcumin was recovered from the recovery pocket 74 of the spray drying chamber 71 and from the lower part of the cyclone 91 and the bag filter 93.

A sample for transmission electron microscope (TEM) observation was prepared from the recovered dry powder of curcumin by the following procedure. The recovered dry powder of curcumin was added to pure water and was subjected to dispersion treatment for 1 minute by an ultrasonic dispersion device while cooling on ice. The curcumin particle dispersion solution after the dispersion treatment was dropped onto a support membrane for TEM observation and was air-dried.

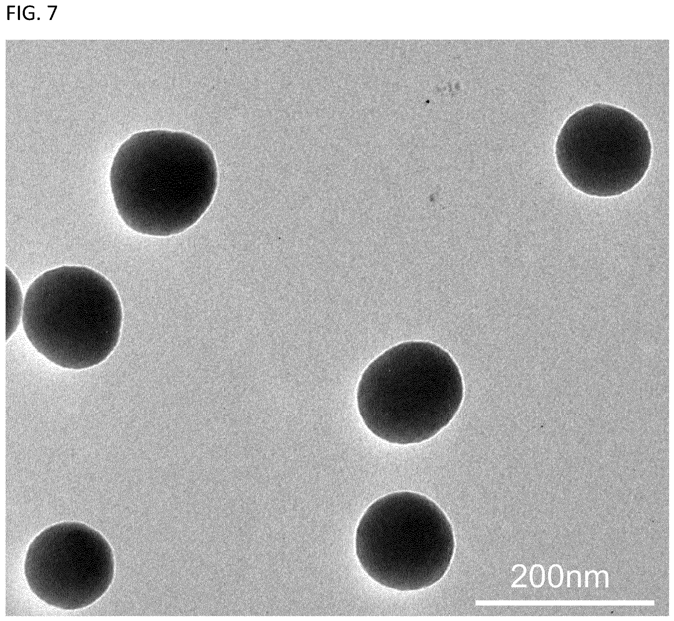

The said sample was observed with a transmission electron microscope TEM (manufactured by JEOL Ltd., Model JEM-2100) at an observation magnification of 30,000 times. A TEM picture of the curcumin particles obtained in Example 1 of the present application is shown in Fig. 7. Amorphous curcumin particles with an average particle diameter of 108 nm were obtained. Also, it was confirmed that the curcumin particles of Example 1 were amorphous by X-ray diffraction measurement. Further, the average circularity of Example 1 was 0.89, and the coefficient of variation (CV) of the particle diameter of Example 1 was 0.0716.

Incidentally, when the recovered dry powder of curcumin was transferred to a petri dish and smelled, there was no smell of ethanol at all.

Comparative Example 1

Curcumin particles were obtained under the same conditions as in Example 1, except that the rotation speed of the first processing member 10 was changed to 6,050 rpm (31.7 m/sec as the peripheral speed at the outer circumference) in the crystallization operation by the poor solvent method. In the same manner as in Example 1, a sample for transmission electron microscope (TEM) observation was prepared from the recovered dry powder of curcumin, and the said sample was observed with a transmission electron microscope TEM (manufactured by JEOL Ltd., Model JEM-2100) at an observation magnification of 25,000 times.

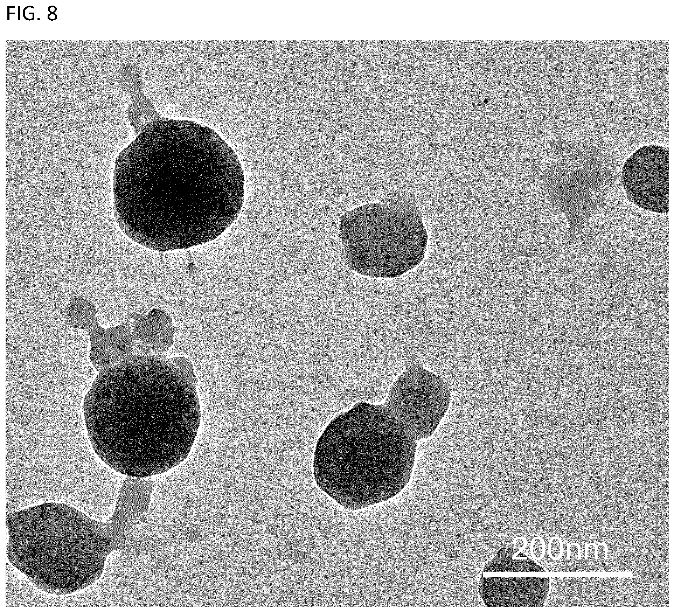

A TEM picture of the curcumin particles obtained in Comparative Example 1 is shown in Fig. 8. Curcumin particles having an average particle diameter of 82 nm were obtained. Further, as a result of X-ray diffraction measurement, it was confirmed that curcumin particles obtained in Comparative Example 1 were amorphous. In addition, the average circularity of Comparative Example 1 was 0.69, and the coefficient of variation (CV) of the particle diameter of Comparative Example 1 was 0.512.

In Example 1, curcumin particles having a narrower particle diameter distribution and higher average circularity could be obtained as compared with those of Comparative Example 1.

In Comparative Example 1, the Reynolds number Re and the shear force $\tau$ of the thin-film fluid became higher as compared with those of Example 1 because the first processing member 10 was rotated with higher speed than Example 1.

When the Reynolds number Re of the thin-film fluid was higher, it is considered that since the number of the small particles increased due to turbulence in the flow field, the average particle diameter of the curcumin particles obtained in Comparative Example 1 became smaller.

In addition, when the Reynolds number Re of the thin-film fluid increased, the flow field was disturbed and uncertain element such as vortices increased, so that it is considered that the coefficient of variation (CV) of the curcumin particles obtained in Comparative Example 1 became increased.

Further, in Comparative Example 1, although the shear force $\tau$ was higher as compared with Example 1, the Reynolds number Re was also higher. As a result, as mentioned above, the flow field was disturbed and uncertain element such as vortices increased, in the curcumin particles obtained in Comparative Example 1, it is considered that large particles to small particles were generated and the average circularity was also lowered. In addition, in the organic materials including curcumin, small particles have higher solubility than large particles, so that Ostwald ripening in which small particles merge with large particles occurs, and by this, it is also considered that the average circularity of the curcumin particles obtained in Comparative Example was reduced. In Comparative Example 1, as shown in Fig. 8, the particles in which two particles appeared to be connected were confirmed.

Incidentally, in the Example, the circularity of the obtained curcumin particles was changed by changing the rotation speed of the first processing member 10 to change the Reynolds number Re and the shear force $\tau$ of the thin-film fluid.

EXPLANATION OF REFERENCE NUMERALS

1 First processing surface
2 Second processing surface
3 Circular flow path
4 Outlet portion
10 First processing member
20 Second processing member
71 Spray drying chamber
81 Gas supply device
102 First fluid preparation device
103 First fluid temperature adjustment device
104 First fluid pressure imparting mechanism
202 Second fluid preparation device
203 Second fluid temperature adjustment device
204 Second fluid pressure imparting mechanism
300 Fluid
301 Thin-film fluid
302 Particles
D Spray dryer
F Spray device
M Rotation mechanism
d1 First introduction part
d10 First introduction port

d2 Second introduction part
d20 Second introduction port
P Pressure at introduction port of fluid to be processed
p Pressure in spray drying chamber
p1 Pressure of fluid at outlet portion between processing surfaces
p2 Pressure for pressure loss in circular flow path

**Claims**

1. A spray dryer comprising a spray device, wherein the device comprises;

   at least two processing surfaces which are disposed in a position opposite to each other, and
   a rotation mechanism for rotating at least one of the at least two processing surfaces relative to the other, wherein
   the at least two processing surfaces define a circular flow path through which a fluid to be processed passes,
   the circular flow path includes at least two introduction ports,
   the fluid to be processed includes a first fluid and a second fluid, and wherein
   the device is configured such that one of the introduction ports is an opening leading to the circular flow path, and
   the first fluid is introduced from inside the circular flow path, and
   the other one of introduction ports is opened in the middle of the circular flow path, the second fluid is merged with
   the first fluid which has become a thin-film fluid forced by the at least two processing surfaces to perform the fluid
   processing to the fluid to be processed between the at least two processing surfaces, and the fluid subjected to the
   fluid processing is sprayed outside from between the at least two processing surfaces.

2. A spray dryer comprising a spray device, wherein the device comprises;

   at least two processing surfaces which are disposed in a position opposite to each other, and
   a rotation mechanism for rotating at least one of the at least two processing surfaces relative to the other, wherein
   the at least two processing surfaces define a circular flow path through which a fluid to be processed passes, and
   the fluid to be processed comprises two or more kinds of raw material fluids,
   the device is configured such that the two or more kinds of raw material fluids are introduced into the circular flow
   path, respectively, and
   the two or more kinds of raw material fluids pass through the circular flow path from the inside to the outside in the
   radial direction in a state of thin-film fluids, whereby the fluid processing to the fluid to be processed is subjected
   between the at least two processing surfaces, and the fluid subjected to the fluid processing is sprayed outside
   from between the at least two processing surfaces.

3. The spray dryer according to Claim 1 or 2, wherein

   a spray drying chamber for housing the spray device is provided, and
   the difference (p1-p) between a pressure p1 of the fluid subjected to the fluid processing at the outlet portion
   between the at least two processing surfaces and a pressure p in the spray drying chamber is 20 kPa or more and
   200 kPa or less.

4. The spray dryer according to any one of Claims 1 to 3, wherein

   the thin-film fluid formed by merging of the fluid to be processed in the circular flow path contains particles, and
   the spray device is provided which is configured to give a rotation imparting force to the particles.

5. The spray dryer according to any one of Claims 1 to 4, wherein
   the fluid processing is a chemical reaction.

6. The spray dryer according to any one of Claims 1 to 5, wherein
   the distance between the at least two processing surfaces is 1 mm or less.

7. The spray dryer according to any one of Claims 1 to 6, wherein
   the at least two processing surfaces rotate relatively at a rotation speed of 6,000 rpm or less.

8. The spray dryer according to any one of Claims 1 to 7, wherein
   the spray dryer comprises a raw material supply device that supplies the fluid to be processed as a raw material to the spray device, a spray drying chamber that houses the spray device, and a gas supply device that supplies gas for drying the fluid subjected to the fluid processing sprayed from the spray device to the spray drying chamber.

9. The spray dryer according to any one of Claim 3, Claims 4 to 7 which cite Claim 3, or Claim 8, wherein
   a microwave irradiation mechanism is installed in the spray drying chamber to irradiate microwaves to the fluid subjected to the fluid processing sprayed from the spray device.

FIG. 1

FIG. 2

FIG. 3

（A）

13

1

R

（B）

1

13

16

d20

nO

FIG. 4

（A）

（B）

FIG. 5

FIG. 6

FIG. 7

200nm

FIG. 8

## INTERNATIONAL SEARCH REPORT

| International application No. |
|---|
| **PCT/JP2022/011076** |

**A. CLASSIFICATION OF SUBJECT MATTER**

*F26B 3/24*(2006.01)i; *F26B 17/28*(2006.01)i; *B01J 2/02*(2006.01)i
FI: F26B3/24; F26B17/28; B01J2/02 Z

According to International Patent Classification (IPC) or to both national classification and IPC

**B. FIELDS SEARCHED**

Minimum documentation searched (classification system followed by classification symbols)

F26B3/24; F26B17/28; B01J2/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-189348 A (M TECHNIQUE CO LTD) 29 September 2011 (2011-09-29) paragraphs [0018]-[0035], [0584]-[0604], fig. 1 | 1-2, 4-7 |
| Y | paragraphs [0018]-[0035], [0584]-[0604], fig. 1 | 3, 8-9 |
| Y | JP 2003-534895 A (HENKEL KOMMANDITGESELLSCHAFT AUF AKTIEN) 25 November 2003 (2003-11-25) paragraphs [0014]-[0016] | 3, 8-9 |
| Y | JP 2021-176833 A (M TECHNIQUE CO LTD) 11 November 2021 (2021-11-11) paragraphs [0041]-[0042] | 8-9 |
| Y | CN 201007596 Y (TIANSHUI HUAYUAN PHARMACY EQUIPMENT TECHNOLOGY CO., LTD.) 16 January 2008 (2008-01-16) p. 4, line 16 to p. 5, line 16, fig. 1-2 | 9 |
| A | JP 2004-160309 A (NIPPON BORON KK) 10 June 2004 (2004-06-10) entire text, all drawings | 1-9 |
| A | JP 2006-326398 A (TDK CORP) 07 December 2006 (2006-12-07) entire text, all drawings | 1-9 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/011076**

### C. DOCUMENTS CONSIDERED TO BE RELEVANT

| Category* | Citation of document, with indication, where appropriate, of the relevant passages | Relevant to claim No. |
|---|---|---|
| A | US 5217362 A (THOMPSON, Richard E.) 08 June 1993 (1993-06-08)<br>entire text, all drawings | 1-9 |

Form PCT/ISA/210 (second sheet) (January 2015)

**INTERNATIONAL SEARCH REPORT**
**Information on patent family members**

International application No.

**PCT/JP2022/011076**

| Patent document cited in search report | | | Publication date (day/month/year) | Patent family member(s) | | | Publication date (day/month/year) |
|---|---|---|---|---|---|---|---|
| JP | 2011-189348 | A | 29 September 2011 | WO 2009/008393 A1 paragraphs [0017]-[0034], [0583]-[0603], fig. 1 EP 2184109 A1 KR 10-2010-0022093 A CN 101790430 A | | | |
| JP | 2003-534895 | A | 25 November 2003 | US 2003/0141378 A1 paragraphs [0014]-[0024] WO 2001/083071 A1 | | | |
| JP | 2021-176833 | A | 11 November 2021 | (Family: none) | | | |
| CN | 201007596 | Y | 16 January 2008 | (Family: none) | | | |
| JP | 2004-160309 | A | 10 June 2004 | (Family: none) | | | |
| JP | 2006-326398 | A | 07 December 2006 | (Family: none) | | | |
| US | 5217362 | A | 08 June 1993 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002249512 A
- JP 2004160309 A
- JP 2006326398 A
- JP 2002034510 A
- JP 6277567 A
- JP 2011189348 A